# DEMANDE DE BREVET EUROPEEN

(11) **EP 1 030 261 A1**
(43) Date de publication de la demande: **23.08.2000**
(21) Numéro de dépôt: 00400422.2
(22) Date de dépôt: 15.02.2000
(51) Int. Cl.: G06K 7/10

(54) **Dispositif de lecture optique d'information portées par un support tel qu'un ticket de jeu**

(30) Priorité: 16.02.1999 FR 9901841
(71) Demandeur: SAGEM SA, 75116 Paris (FR)
(72) Inventeur: Lallemant, Jean-Francois, 78600 Le Mesnil le Roi (FR)
(74) Mandataire: Bloch, Gérard

(57) **Abrégé**

Dispositif de lecture optique d'informations portées par les deux faces, arrière et avant, d'un support d'informations, comprenant des moyens (14, 16, 13) de réception du support dans le dispositif, des moyens de lecture optique (1), un miroir de réflexion (19) et des moyens agencés pour que le support d'informations et les moyens de lecture optique (4) soient entraînés en déplacement relatif entre une position de lecture des informations de la face avant du support, par réflexion sur ledit miroir (19), et une position de lecture directe des informations de la face arrière du support, dans laquelle le support intercepte le faisceau optique de lecture de la face avant du support.

L'invention s'applique à la lecture de tickets de jeu.

## Description

L'invention concerne un dispositif de lecture optique d'informations portées par un support tel qu'un ticket de jeu.

Les tickets de jeu, pour reprendre cet exemple, se divisent principalement en deux catégories: les tickets à gratter pour découvrir un gain et les tickets à remplir pour parier sur une course de chevaux, sur une combinaison de chiffres et autres enjeux.

Les distributeurs de tickets de jeu utilisent généralement un dispositif de lecture optique, leur permettant de lire des informations portées par un ticket, afin par exemple d'en vérifier la validité. Les informations à lire, par exemple un code-barre, peuvent être portées par l'une ou par les deux faces du ticket. Dans ce dernier cas, le ticket doit être retourné entre les lectures respectives des deux faces, soit manuellement par le distributeur soit à l'aide d'un mécanisme de retournement intégré dans le dispositif.

La présente invention vise à faciliter la lecture des deux faces d'un ticket de jeu, et plus généralement d'un support d'informations.

A cet effet, l'invention concerne un dispositif de lecture optique d'informations portées par les deux faces, arrière et avant, d'un support d'informations, comprenant des moyens de réception du support dans le dispositif, des moyens de lecture optique, des moyens de réflexion sur l'axe des moyens de lecture et des moyens agencés pour que le support d'informations et les moyens de lecture optique soient entraînés en déplacement relatif pour lire les informations de la face avant du support, par réflexion sur lesdits moyens de réflexion, et pour lire directement les informations de la face arrière du support, le support interceptant le faisceau optique de lecture de la face avant du support, caractérisé par le fait que les moyens de réception du support sont agencés pour que le support soit incliné sur l'axe des moyens de lecture et lesdits moyens de réflexion comprennent un unique miroir.

Grâce à l'invention, les informations portées par les deux faces du support sont lues sans retournement de celui-ci. Les informations de la face avant sont lues par réflexion d'un faisceau optique de lecture sur le miroir, et les informations de la face arrière sont lues après interception du faisceau optique de lecture de la face avant par le support lui-même.

Dans une forme de réalisation particulière, il est prévu un mécanisme d'entraînement en déplacement relatif du support d'informations et des moyens de lecture optique.

Dans une autre forme de réalisation, il est prévu, entre une entrée supérieure et une sortie inférieure de support d'informations, un passage de réception du support d'informations agencé pour que ledit support se déplace de l'entrée vers la sortie sous l'effet de son propre poids.

De préférence, les moyens de lecture optique comprennent un capteur optique associé à un système optique à grande profondeur de champ.

Grâce à cela, on peut utiliser un capteur optique standard, moins coûteux qu'un système laser notamment. Les moyens de lecture optique peuvent ainsi comprendre un capteur CCD (Charged Coupled Device . dispositif à transfert de charge).

Avantageusement, le dispositif comporte une fenêtre de lecture d'un support d'informations externe au dispositif.

Grâce à cela, on peut lire non seulement des supports d'informations introduits le dispositif, mais également des supports d'informations externes au dispositif.

Avantageusement encore, il est prévu un volet d'obturation de ladite fenêtre, mobile entre une position ouverte de lecture d'un support d'informations externe au dispositif et une position fermée de lecture d'un support d'informations interne au dispositif.

L'invention sera mieux comprise à l'aide de la description suivante d'une forme de réalisation particulière du dispositif de lecture de l'invention, en référence au dessin annexé sur lequel:
- la figure 1 représente une vue en coupe latérale du dispositif de lecture, sans capot de protection supérieur, selon la forme de réalisation particulière, en position ouverte;
- la figure 2 représente une vue en coupe latérale du dispositif de lecture de la figure 1, en position fermée;

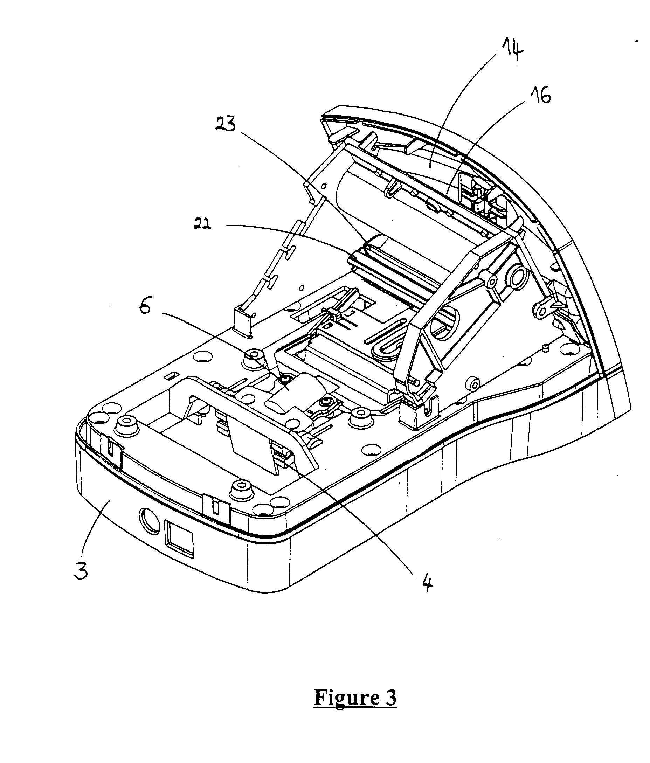

- la figure 3 représente une vue en perpective du dispositif de la figure 1;
- la figure 4 représente une vue schématique du système optique de lecture du dispositif de la figure 1, lors de la lecture de la face avant d'un ticket de jeu interne au dispositif et
- la figure 5 représente une vue schématique du système optique de lecture du dispositif de la figure 1, lors de la lecture de la face arrière d'un ticket de jeu interne au dispositif.

Le dispositif de lecture optique est destiné à lire des informations, ici des codes-barres, portées par les deux faces, arrière et avant, d'un support d'informations consistant, dans l'exemple particulier de la description, en un ticket de jeu.

Le dispositif comprend, dans un boîtier comportant un châssis 3 et un capot supérieur de protection non représenté, un ensemble de lecture optique 1 et un ensemble 2 de réception d'un ticket de jeu.

D'emblée, on notera que l'ensemble de lecture optique 1 et l'ensemble de réception 2 sont respectivement situés à l'arrière et à l'avant du dispositif. Ainsi, la face arrière et la face avant d'un ticket de jeu s'entendent respectivement de la face orientée vers l'arrière du dispositif, et de la face opposée, orientée vers l'avant.

L'ensemble de lecture optique 1 comprend un capteur optique 4, en l'espèce un capteur CCD (Charge Coupled Device - dispositif à transfert de charges), associé à un module optique 6, rapporté à l'avant du capteur CCD 4. Une vitre transparente 12 est interposée entre le capteur CCD 4 et le module optique 6.

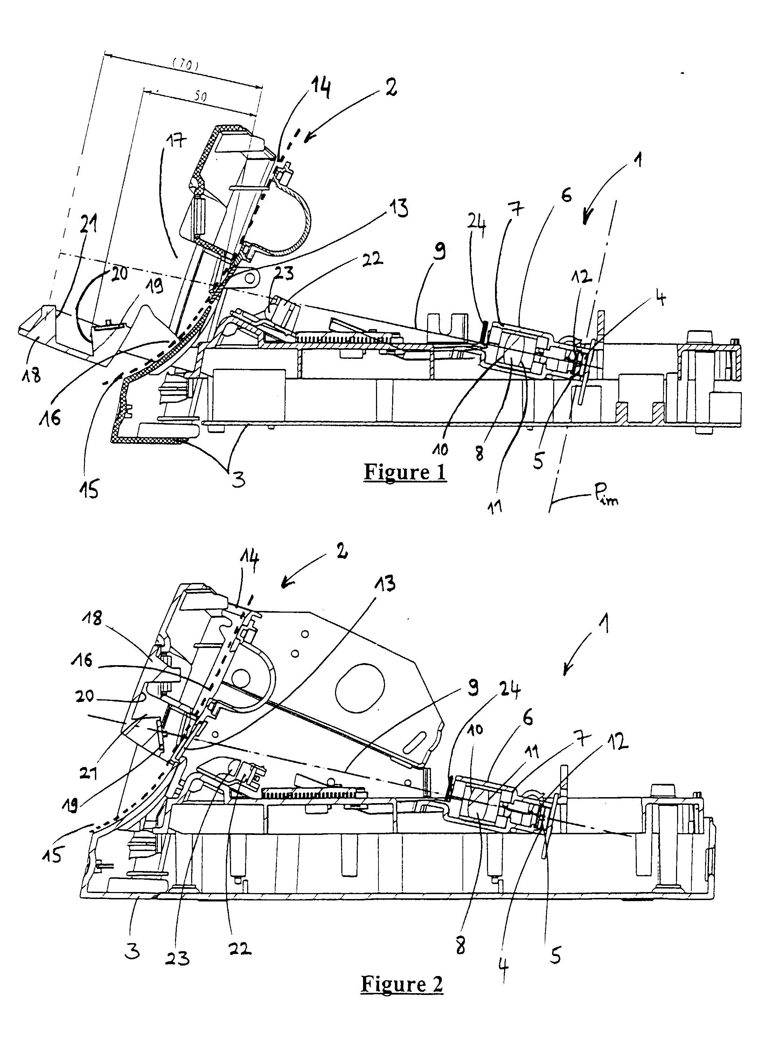

Le capteur CCD 4 comprend une barrette d'éléments de photodétection s'étendant perpendiculairement au plan des figures 1 et 2, dans une surface de détection 5, et présente une résolution optique compatible avec la largeur des barres élémentaires des codes-barres à lire, autrement dit lui permettant distinguer deux barres élémentaires adjacentes d'un code-barre.

Le module optique 6 comprend, à l'intérieur d'un boîtier 7, un objectif, ou système optique 8, d'axe optique 9, destiné à focaliser des faisceaux optiques de lecture sensiblement dans un plan image Pᵢₘ perpendiculaire à l'axe optique 9, dans lequel s'étend la surface de détection 5 du capteur CCD 4. Le système optique 8 comprend une pupille avant d'entrée 10 et une pupille arrière de sortie 11, ici distante l'une de l'autre de 8,3 mm (millimètres) le long de l'axe optique 9. La pupille de sortie 11 est située à une distance de 24,69 mm, le long de l'axe optique 9, du plan image Pᵢₘ.

Le système optique est fabriqué par la société FUJINON, et disponible sous la référence FAQ18/25. Ses caractéristiques, fournies par le fabriquant, sont contenues dans le tableau suivant.

**Tableau**

| | |
|---|---|
| Distance focale | 24,6 mm±0,7 mm |
| Ouverture N (ou nombre-F) | 17,8 ± 6% |
| Grossissement | - 0,1834 |
| Longueur d'ondes | 660 nm ± 30 nm |
| Profondeur de champ (P.C.) | ± 35 mm autour d'un plan situé à 190 mm du plan image Pᵢₘ, le long de l'axe optique |
| Taille objet | 105 mm (pour P.C.= 155 mm) 132,1 mm (pour P.C. = 190 mm) 159,2 mm (pour P.C. = 225 mm) |
| FTM (Fonction de Transfert de Modulation) | > 40% (2 cycles / mm sur le plan objet) ( > 40% (10,9 cycles / mm sur le plan image)) |
| Distorsion | > \|0,2%\| |
| Pupille de sortie | à 24,8 mm du plan image |
| vitres | côté objet (vitre 13): épaisseur = 2 mm; n = 1,51 côté image (vitre 12): épaisseur = 0,8 mm; n = 1,51 |
| Taille de l'objectif | 16 mm (diamètre) X 13 mm (longueur) |

La profondeur de champ désigne la distance séparant deux plans objets limites perpendiculaires à l'axe optique 9, entre lesquels la résolution optique, ou FTM, est supérieure à une valeur donnée, ici égale à 40% pour 2 cycles/mm sur le plan objet. Le terme "n" s'entend de l'indice optique du matériau constituant la vitre.

La profondeur de champ du système optique 8 peut varier de plus ou moins 35mm autour d'un plan objet situé à 190mm du plan image Pᵢₘ, le long de l'axe optique 9, pour une résolution optique suffisante, représentée par la FTM. En d'autres termes, la résolution optique de l'ensemble de lecture optique 1 étant limitée par celle du système optique 8, l'ensemble de lecture optique 1 peut lire, avec une résolution optique suffisante, des codes-barres positionnés dans des plans objets situés entre deux plans objets limites respectivement situés à 155 mm et à 225 mm du plan image Pᵢₘ, le long de l'axe optique 9.

L'ensemble de lecture optique 1 est relié à un système de traitement des informations lues par le capteur CCD 4, non représenté, destiné à interpréter les informations lues et à les coder en noir et blanc.

Le système 2 de réception d'un ticket de jeu comprend, entre une entrée supérieure 14 d'introduction et une sortie inférieure 15 d'éjection d'un ticket de jeu, un passage 16 de réception du ticket.

Un mécanisme d'entraînement en déplacement d'un ticket de jeu, non représenté, est disposé au voisinage de l'entrée 14 et comporte un rouleau de préhension et d'entraînement du ticket, monté rotatif et en appui contre une plaque d'appui dans le passage de réception 16.

Une vitre 13 de réception d'un ticket de jeu s'étend le long du passage de réception 16, à travers l'axe optique 9, dans un plan ici légèrement incliné vers l'arrière sur l'axe optique 9 par rapport au plan image Pᵢₘ, à une distance de 122,01 millimètres de la pupille d'entrée 10 du système optique 8, le long de l'axe 9, autrement dit sensiblement à une distance de 155 mm du plan image Pᵢₘ. Ainsi, lorsqu'un ticket de jeu est positionné contre la face avant de la vitre 13, sa face arrière et sa face avant s'étendent respectivement dans un plan objet P₁ et dans un plan objet P₂, situés sensiblement à une distance de 155 mm du plan image Pᵢₘ.

Un détecteur de présence de ticket, non représenté, est disposé au voisinage de l'entrée 14.

Le boîtier du dispositif de lecture ménage une fenêtre 17 de lecture d'un ticket de jeu externe au dispositif, s'étendant à travers l'axe optique 9, à l'avant de la vitre 13.

Un volet 18 d'obturation de la fenêtre 17 est monté mobile, ici pivotant, sur le boîtier du dispositif entre une position ouverte, de lecture d'un ticket de jeu externe au dispositif, et une position fermée, de lecture d'un ticket de jeu interne au dispositif. La paroi interne du volet 18 ménage un évidement dont les parois avant 20 et arrière 21, en position ouverte du volet 18, constituent des repères pour positionner un ticket de jeu à l'extérieur du dispositif, de façon à ce que l'ensemble de lecture optique 1 lise les informations portées par la face arrière de ce ticket, à travers la fenêtre de lecture 17. Lorsque le ticket de jeu est positionné légèrement au-dessus du volet 18, globalement entre les prolongements respectifs des deux parois 20, 21, il s'étend dans un plan objet P₃ traversant l'axe optique 9 et situé à une distance du plan image Pᵢₘ comprise entre 205 mm et 225 mm.

Le dispositif comprend en outre un unique miroir de réflexion avant 19, solidaire du volet 18 et supporté par la paroi interne de celui-ci, destiné à réfléchir un faisceau optique de lecture de la face avant d'un ticket de jeu interne au dispositif. Lorsque le volet d'obturation 18 est fermé, le miroir 19 est disposé au-dessous de l'évidement du volet 18 et il s'étend à travers l'axe optique 9, à l'avant de la vitre 13, dans un plan légèrement incliné vers l'avant sur l'axe optique 9 par rapport au plan image Pᵢₘ.

Grâce à la grande profondeur de champ du système optique 8, le capteur CCD 4 peut lire des informations sur les deux faces, arrière et avant, d'un ticket de jeu introduit dans le dispositif, ainsi que sur la face arrière d'un ticket externe au dispositif.

Un barreau de diodes électroluminescentes (LED) 22 d'éclairage d'un ticket de jeu est disposé à l'arrière de la vitre 13. Un concentrateur de lumière 23, rapporté sur le barreau de LED 22, est destiné à rétrécir le cône formé par les faisceaux lumineux d'éclairage afin d'augmenter la puissance de l'éclairage, dans la direction de l'axe optique.

Un filtre optique 24 est rapporté à l'avant du module optique 6, sur l'entrée de celui-ci située au voisinage de la pupille d'entrée 10, et destiné à filtrer la lumière environnant le dispositif en ne laissant passer que les longueurs d'ondes globalement comprises entre 600 et 3000 nm (nanomètres). Grâce à cela, le dispositif peut lire un ticket de jeu externe, avec le volet d'obturation 18 ouvert, sans risque de perturbation due à la lumière ambiante.

Enfin, le dispositif comprend une unité centrale de commande, à laquelle tous les éléments du dispositif sont reliés et destinée à en commander le fonctionnement, ainsi qu'une touche de lecture pour commander la lecture d'un ticket de jeu externe au dispositif.

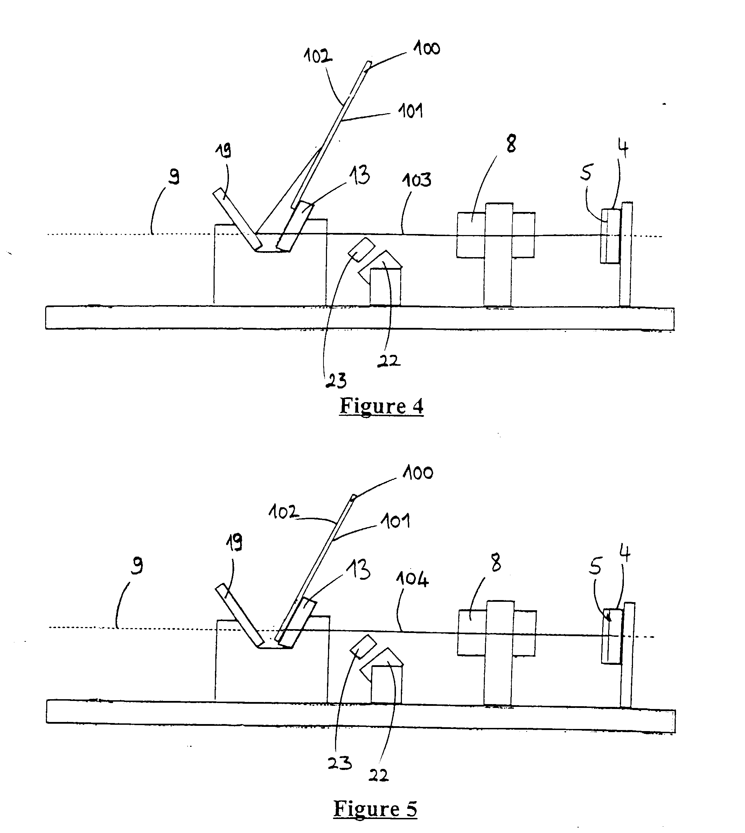

Après la description fonctionnelle et structurelle du dispositif de lecture d'un ticket de jeu, son fonctionnement va maintenant être explicité, pour la lecture d'un ticket de jeu introduit dans le dispositif, en référence aux figures 4 et 5, et d'un ticket de jeu externe au dispositif.

### 1) Lecture d'un ticket de jeu introduit dans le dispositif

Le ticket de jeu 100 supporte sur ses faces, arrière 101 et avant 102 respectivement, une zone d'informations Z₁ et une zone d'informations Z₂, contenant chacune un code-barre.

Après avoir obturé la fenêtre de lecture 17 en fermant le volet d'obturation 18, un utilisateur introduit le ticket 100 dans le dispositif par l'entrée 14. Lors de son introduction, le ticket 100 est pris entre le rouleau de préhension et d'entraînement et la plaque d'appui et détecté par le détecteur de présence qui active le capteur CCD 4 et commande l'entraînement en rotation du rouleau de préhension et d'entraînement du ticket 100.

Le ticket 100 est entraîné en déplacement vers le bas, sous l'action de l'entraînement en rotation du rouleau de préhension et d'entraînement, dans le passage de réception 16, de l'entrée 14 vers la sortie 15, en passant par une position de lecture de la zone d'informations Z₂ de la face avant 102, par réflexion sur le miroir 19, puis par une position de lecture directe de la zone d'informations Z₁ de la face arrière 101.

Dans la position de lecture de la zone d'informations Z₂, le ticket 100 est situé au-dessus de l'axe optique 9 et sa face avant s'étend dans le plan objet P₂. La zone d'informations Z₂ s'étend perpendiculairement au plan des figures 1 et 2 et est éclairée par le barreau d'éclairage 22, par réflexion sur le miroir 19. La zone Z₂ émet un faisceau optique 103 de lecture du code-barre de la face avant 102 vers le miroir avant 19 qui le réfléchit vers l'arrière, parallèlement à l'axe optique 9. Le faisceau de lecture 103 traverse la vitre 13, en passant au-dessous du ticket 100, puis le système optique 8, la vitre 12 et enfin vient frapper la surface de détection 5. Le capteur CCD 4 lit les informations de la zone Z₂, à l'aide du faisceau de lecture reçu.

Lors de son déplacement vers le bas entre la position de lecture de la zone d'informations Z₁ et la position de lecture de la zone d'informations Z₂, le ticket 100 intercepte le faisceau optique de lecture de la face avant.

Dans la position de lecture de la zone d'informations Z₁, le ticket 100 intercepte donc le faisceau optique de lecture de la face avant 102 et la face arrière 101 s'étend dans le plan objet P₁. La zone d'informations Z₁ s'étend à travers l'axe optique 9, perpendiculairement au plan des figures 1 et 2. Elle est éclairée par le barreau d'éclairage 22 et émet vers l'arrière, parallèlement à l'axe optique 9, un faisceau optique 104 de lecture du code-barre de la face arrière 101, qui traverse la vitre 13, le filtre 24, le système optique 8 et la vitre 12, et enfin vient frapper la surface de détection 5. Le capteur CCD 4 lit le code-barre de la zone Z₁, à l'aide du faisceau de lecture 104 reçu.

On soulignera ici que, pour une résolution optique suffisante pour lire les codes- barres, la profondeur de champ du système optique 8 est au moins égale à la différence entre le trajet du faisceau optique de lecture de la face arrière du ticket 100 et le trajet optique du faisceau optique de lecture de la face avant du ticket 100. Grâce à cela, l'ensemble de lecture optique 1 lit les codes-barres des faces arrière 101 et avant 102 avec une résolution suffisante.

Après la lecture de la zone d'informations Z₁, le ticket 100 continue de se déplacer vers le bas, sous l'action de l'entraînement en rotation du rouleau de préhension et d'entraînement, et est éjecté du dispositif par la sortie 15.

### 2) Lecture d'un ticket de jeu externe au dispositif

Le ticket de jeu comprend ici une zone d'informations Z₃, contenant un code-barre, portée par l'une de ses faces.

Après avoir dégagé la fenêtre de lecture 17 en ouvrant le volet d'obturation 18, l'utilisateur positionne le ticket devant la fenêtre 17, sensiblement verticalement, dans un plan objet P₃, en orientant vers l'arrière la face supportant la zone d'informations Z₃, que l'on qualifiera donc par la suite de "face arrière". Cette face arrière est alors située dans un plan objet P₃, situé à une distance du plan image Pᵢₘ comprise entre 205 et 225 mm le long de l'axe optique 9, et la zone d'informations Z₃ s'étend à travers l'axe optique 9, perpendiculairement au plan des figures 1 et 2.

Afin de lire les informations de la zone d'informations Z₃, l'utilisateur appuie sur la touche de lecture du dispositif afin d'activer le capteur CCD 4. La zone d'informations Z₃, éclairée par le barreau d'éclairage 22, émet vers l'arrière un faisceau optique de lecture du code-barre qui traverse la fenêtre de lecture 17, la vitre 13, le filtre 24, le système optique 8 et la vitre 12, avant de venir frapper la surface de détection 5. Le capteur CCD 4 lit le code-barre de la zone de lecture Z₃, à l'aide du faisceau de lecture reçu.

On soulignera également ici que, pour une résolution optique suffisante pour lire les codes-barres, la profondeur de champ du système optique 8 est au moins égale à la différence entre le trajet optique de lecture directe de la face arrière d'un ticket de jeu interne au dispositif et le trajet optique de lecture directe de la face arrière d'un ticket de jeu externe au dispositif. Grâce à cela, l'ensemble de lecture optique 1 peut lire de façon nette des codes barres portées les faces arrières respectives d'un ticket de jeu externe et d'un ticket de jeu interne au dispositif.

On pourrait prévoir de supprimer le mécanisme d'entraînement en déplacement du ticket de jeu. Dans ce cas, le dispositif comprendrait, entre une entrée et une sortie de ticket de jeu, un passage globalement vertical de réception et de guidage du ticket de jeu, agencé pour recevoir et guider le ticket de jeu entraîné en déplacement vers le bas, sous l'effet de son propre poids, autrement dit par gravité, de l'entrée vers la sortie.

Dans la description qui vient d'être faite, le miroir de réflexion 19 pour lire les informations de la face avant d'un ticket de jeu et le capteur 4 sont disposés de telle sorte que le faisceau de lecture 103 traverse la vitre 13 de réception du ticket en passant au-dessous du ticket. On pourrait également envisager de disposer le miroir de réflexion et le capteur de telle sorte que le faisceau de lecture de la face avant traverse la vitre en passant au-dessus du ticket.

A la place ou en sus des codes barres, le dispositif de lecture de l'invention pourrait être agencé pour lire tout autre type d'informations telles que des croix, des informations manuscrites, etc.. En outre, le système de traitement des informations lues par le capteur CCD pourrait être agencé pour coder les informations lues en niveaux de gris ou bien en couleur.

## Revendications

1. Dispositif de lecture optique d'informations portées par les deux faces, arrière (101) et avant (102), d'un support d'informations (100), comprenant des moyens (14, 16, 13) de réception du support (100) dans le dispositif, des moyens de lecture optique (4), des moyens de réflexion (19) sur l'axe (9) des moyens de lecture (4) et des moyens agencés pour que le support d'informations (100) et les moyens de lecture optique (4) soient entraînés en déplacement relatif pour lire les informations de la face avant (102) du support (100), par réflexion sur lesdits moyens de réflexion (19), et pour lire directement les informations de la face arrière (101) du support (100), le support (100) interceptant le faisceau optique (103) de lecture de la face avant (102) du support (100), caractérisé par le fait que les moyens de réception (13) du support (100) sont agencés pour que le support (100) soit incliné sur l'axe (9) des moyens de lecture (4) et lesdits moyens de réflexion comprennent un unique miroir (19).

2. Dispositif selon la revendication 1, dans lequel il est prévu un mécanisme d'entraînement en déplacement relatif du support d'informations (100) et des moyens de lecture optique (1).

3. Dispositif selon la revendication 1, dans lequel il est prévu, entre une entrée supérieure et une sortie inférieure de support d'informations (100), un passage de réception du support d'informations agencé pour que ledit support se déplace de l'entrée vers la sortie sous l'effet de son propre poids.

4. Dispositif selon l'une des revendications 1 à 3, dans lequel les moyens de lecture optique (1) comprennent un capteur optique (4) associé à un système optique (8) à grande profondeur de champ.

5. Dispositif selon la revendication 4, dans lequel la profondeur de champ du système optique (8) est au moins égale, pour une résolution optique suffisante pour lire les informations, à la différence entre les trajets des faisceaux optiques de lecture de la face arrière (101) et de la face avant (102) du support (100), respectivement.

6. Dispositif selon l'une des revendications 1 à 5, dans lequel le dispositif comporte une fenêtre (17) de lecture d'un support d'informations (120) externe au dispositif.

7. Dispositif selon la revendication 6, dans lequel il est prévu un volet (18) d'obturation de la fenêtre de lecture (17), mobile entre une position ouverte de lecture d'un support d'informations (120) externe au dispositif et une position fermée de lecture d'un support d'informations (100) interne au dispositif.

8. Dispositif selon la revendication 7, dans lequel le miroir de réflexion (19) est solidaire du volet d'obturation (18).

9. Dispositif selon l'une des revendications 1 à 8, dans lequel les moyens de lecture optique (1) comprennent un capteur CCD (4).

10. Dispositif selon l'une des revendications 1 à 9, dans lequel il est prévu des moyens d'éclairage (22) associés à des moyens (23) de concentration de l'énergie lumineuse.

11. Dispositif selon l'une des revendications 1 à 10, dans lequel il est prévu un filtre optique (24) pour filtrer la lumière environnant le dispositif.
